# EUROPÄISCHE PATENTSCHRIFT

(11) **EP 3 638 882 B1**
(45) Veröffentlichungstag und Bekanntmachung des Hinweises auf die Patenterteilung: **11.09.2024**
(21) Anmeldenummer: 18729995.3
(22) Anmeldetag: 15.06.2018
(51) Int. Cl.: F01C 21/02, F04C 2/08, F04C 2/10, F04C 15/00

(54) **PUMPENANORDNUNG UND VERFAHREN ZUR HERSTELLUNG EINER PUMPENANORDNUNG**
PUMP ASSEMBLY AND METHOD FOR PRODUCING A PUMP ASSEMBLY
AGENCEMENT DE POMPE ET PROCÉDÉ POUR LA FABRICATION D'UN AGENCEMENT DE POMPE

(30) Priorität: 16.06.2017 IT 201700067423
(43) Veröffentlichungstag der Anmeldung: 22.04.2020
(73) Patentinhaber: GKN Sinter Metals AG, 39031 Bruneck (IT)
(72) Erfinder: STEINER, Arno, 39031 Brunico (IT); HECHER, Heinrich, 39030 Antholz Mittertal (IT); INNERBICHLER, Matthias, 39030 Ahrntal (IT); DE NICOL , Alessandro, 39100 Bolzano (IT); FRANCESCHI, Omar, 44020 Masi Torello (Ferrara) (IT); MALOGOWSKI, Tomasz, 39031 Reischach (IT)
(74) Vertreter: karo IP
(86) Internationale Anmeldenummer: PCT/EP2018/065927
(87) Internationale Veröffentlichungsnummer: WO 2018/229243

(56) Entgegenhaltungen:
- EP-A2- 0 509 218
- EP-A2- 1 156 221
- DE-A1- 10 014 548
- DE-A1- 10 048 242
- DE-C- 328 963
- DE-U1- 8 315 309
- JP-Y1- S27 174

## Beschreibung

Die Erfindung betrifft eine Pumpenanordnung sowie ein Verfahren zur Herstellung einer Pumpenanordnung. Die Pumpenanordnung ist zur Förderung eines Fluids vorgesehen. Die Pumpenanordnung umfasst ein Gehäuse und in dem Gehäuse Fördermittel zum Fördern eines Fluids von einem Fluideingang zu einem Fluidausgang. Fluideingang und Fluidausgang sind an dem Gehäuse angeordnet. Zumindest eines der Fördermittel wird über eine Antriebswelle angetrieben, die sich von außerhalb des Gehäuses in das Gehäuse hinein erstreckt. Hier werden als Fördermittel zwei ineinandergreifende Zahnräder vorgesehen. Jedes Zahnrad weist eine Verzahnung an der Umfangsfläche auf, wobei die Zahnräder über die Verzahnung miteinander gekoppelt sind.

Die Zahnräder weisen jeweils eine Drehachse auf, die insbesondere entlang einer axialen Richtung orientiert sind. Die Zahnräder sind in einer radialen Richtung nebeneinander und in der axialen Richtung überlappend angeordnet, wobei die Drehachsen parallel zueinander angeordnet sind.

Bei einer derartige Pumpenanordnung können die Fördermittel auf Wellen angeordnet und die Wellen beidseits des Fördermittels im Gehäuse an Lagerstellen gelagert sein. Weiterhin kann eine Antriebswelle direkt mit dem Fördermittel verbunden und das Fördermittel über die Antriebswelle an Lagerstellen gelagert sein. Gelagert heißt hier, dass in einer radialen Richtung (ggf. zusätzlich in einer axialen Richtung) wirkende Kräfte zumindest in einer radialen Richtung (ggf. auch in der axialen Richtung) über das Fördermittel auf die Welle bzw. auf die Lagerung der Welle in dem Gehäuse übertragen werden. Eine Lagerung der Welle auf beiden Seiten des Fördermittels erfordert eine genaue Abstimmung der Lagetoleranzen der Lagerstellen am Gehäuse. Insbesondere können so ungleichmäßige Belastungen der Lagerstellen und Biegebelastungen der Wellen auftreten.

Aus jeder der EP 0 509 218 A2, DE 100 14 548 A1, DE 83 15 309 U1, DE 100 48 242 A1 sowie JP S27 174 Y1 ist eine Pumpenanordnung bekannt, bei der Zahnräder in einem Gehäuse drehbar gelagert sind.

Hiervon ausgehend ist es Aufgabe der vorliegenden Erfindung, die mit Bezug auf den Stand der Technik geschilderten Probleme zumindest teilweise zu lösen. Insbesondere soll eine Pumpenanordnung vorgeschlagen werden, die möglichst einfach ausgeführt ist, wobei eine ungleichmäßige Belastung der Lagerstellen reduziert oder sogar vermieden werden soll. Dabei soll eine Ausrichtung der die Effektivität der Pumpenanordnung bestimmenden Bauteile mit möglichst großer Genauigkeit ermöglicht werden. Weiterhin soll ein Verfahren zum Zusammenbau einer Pumpenanordnung vorgeschlagen werden, wobei der Zusammenbau mit geringstmöglicher Komplexität und möglichst kleinen Lagetoleranzen erfolgen soll.

Zur Lösung dieser Aufgabe wird eine Pumpenanordnung gemäß den Merkmalen des Patentanspruchs 1 und ein Verfahren gemäß den Merkmalen des Patentanspruchs 8 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Hierzu trägt eine Pumpenanordnung bei, wobei die Pumpenanordnung zumindest die folgenden Komponenten umfasst:
- ein Gehäuse mit zumindest einer Grundplatte und einem Deckelelement, die miteinander verbindbar sind zur Ausbildung eines Druckraums; und
- zwei Zahnräder (als Fördermittel), wobei das erste Zahnrad an einer äußeren Umfangsfläche eine erste Verzahnung mit einem ersten Außendurchmesser und das zweite Zahnrad an einer äußeren Umfangsfläche eine zweite Verzahnung mit einem zweiten Außendurchmesser aufweist. Die Zahnräder greifen über die Verzahnungen zur Förderung eines Fluids ineinander. Die Zahnräder sind entlang einer axialen Richtung zwischen der Grundplatte und dem Deckelelement in dem Druckraum angeordnet.

Der Druckraum ist zumindest durch zwei Bohrungen in dem Gehäuse gebildet. In einer ersten Bohrung mit einem ersten Innendurchmesser ist das erste Zahnrad angeordnet. In einer zweiten Bohrung mit einem zweiten Innendurchmesser ist das zweite Zahnrad angeordnet. Für eine Ausrichtung der Bohrungen und der Zahnräder zueinander ist eine Mehrzahl von Zentrierstiften vorgesehen, wobei alle diese Zentrierstifte ausschließlich über das Deckelelement oder über die Grundplatte zueinander ausgerichtet sind.

Ausschließlich über das Deckelelement oder über die Grundplatte zueinander ausgerichtet bedeutet insbesondere, dass alle Zentrierstifte vor dem weiteren Zusammenbau der Pumpenanordnung zunächst in einer einzigen Komponente der Pumpenanordnung, also entweder in dem Deckelelement oder in der Grundplatte, angeordnet und zueinander ausgerichtet werden. Diese Art des Zusammenbaus lässt sich insbesondere auch an der fertig montierten Pumpenanordnung nachweisen.

Hier sind als Fördermittel zwei ineinandergreifende Zahnräder vorgesehen. Jedes Zahnrad weist eine Verzahnung an der Umfangsfläche auf, wobei die Zahnräder über die Verzahnung miteinander gekoppelt sind. Die Zahnräder weisen jeweils eine Drehachse auf, die insbesondere entlang einer axialen Richtung orientiert sind. Die Zahnräder können in einer radialen Richtung nebeneinander und in der axialen Richtung zueinander überlappend angeordnet sein, wobei die Drehachsen parallel zueinander angeordnet sind.

Das Gehäuse wird zumindest durch eine Grundplatte und ein Deckelelement gebildet. Diese sind entlang der axialen Richtung hintereinander angeordnet, wobei zwischen ihnen die Zahnräder positioniert sind. Grundplatte und Deckelelement umschließen die Zahnräder in einer radialen Richtung außen und bilden so den Druckraum. Der Druckraum ist mit einem Fluideingang und einem Fluidausgang verbunden, so dass ein Fluid über den Fluideingang und den Druckraum zum Fluidausgang gefördert werden kann.

Als Zentrierstift kann eine Komponente der Pumpenanordnung bezeichnet werden, die über eine äußere Umfangsfläche die Anordnung und Positionierung (also deren Lage im Raum, insbesondere in einer radialen Richtung quer zu den Drehachsen der Zahnräder) anderer Komponenten der Pumpenanordnung zueinander bestimmt, einstellt bzw. fixiert. Ein Zentrierstift kann ein separates Bauteil sein. Ein Zentrierstift kann (einseitig) mit einer der Komponenten der Pumpenanordnung einstückig ausgebildet sein. Ein Zentrierstift kann eine längliche und ggf. im Wesentlichen zylindrische Form aufweisen. Ein Zentrierstift kann kraftschlüssig, stoffschlüssig oder formschlüssig mit einer oder mehrerer der Komponenten Grundplatte, Zwischenelement und Deckelelement verbunden sein bzw. verbunden werden.

Insbesondere sind das erste Zahnrad und das zweite Zahnrad jeweils als ein Hohlrad ausgeführt, wobei das erste Zahnrad auf einer ersten Lagerbuchse und das zweite Zahnrad auf einer zweiten Lagerbuchse angeordnet ist. Die erste Lagerbuchse und die zweite Lagerbuchse können jeweils nur entweder in der Grundplatte oder dem Deckelelement gelagert sein. Die erste Lagerbuchse und die zweite Lagerbuchse können jeweils einen Zentrierstift bilden.

Insbesondere sind die Lagerbuchsen als sogenannte Gleitlager oder Reiblager ausgeführt. Im Gleitlager/Reiblager haben die beiden sich relativ zueinander bewegenden Teile (hier Zahnrad und Lagerbuchse oder Lagerbuchse und Gehäuse, also Grundplatte und Deckelelement) direkten Kontakt. Sie gleiten aufeinander gegen den durch Gleitreibung verursachten Widerstand. Dieser kann niedrig gehalten werden durch Wahl einer reibungsarmen Materialpaarung, durch Schmierung oder durch Erzeugen eines Schmierfilms (Vollschmierung), der die beiden Kontaktflächen voneinander trennt. Es können aber auch Wälzlager vorgesehen sein, wobei dann ein Wälzlager zwischen Lagerbuchse und Zahnrad angeordnet ist.

Insbesondere dient das durch die Pumpe geförderte Fluid als Schmiermittel für die Lagerung. Dabei können spezielle Fluidführungen in der Grundplatte und/oder dem Deckelelement vorgesehen sein, durch die ein Teil des durch die Pumpe geförderten Fluids hin zur Lagerstelle geleitet wird.

Jedes Zahnrad kann nur an einer Seite des Zahnrads im Gehäuse (also entweder in der Grundplatte oder im Deckelelement) über die Lagerbuchse gelagert sein. Die für die Lagerung jedes Zahnrads vorgesehene Lagerbuchse erstreckt sich ausgehend von dem Zahnrad nur hin zur Grundplatte oder hin zum Deckelelement. Damit ist die Lagerbuchse nur an einer Seite des Zahnrads im Gehäuse gelagert bzw. befestigt, weist also nur eine Lagerstelle auf. In der radialen Richtung wirkende Kräfte werden so von dem Zahnrad auf die Lagerbuchse (über die Lagerstelle zwischen Zahnrad und Lagerbuchse) und von der Lagerbuchse über die, nur auf einer Seite des Zahnrads vorliegende Lagerstelle (zwischen Lagerbuchse und Gehäuse) auf das Gehäuse übertragen.

Insbesondere sind beide Lagerbuchsen (erster Lagerbuchse und zweiter Lagerbuchse) nur in der Grundplatte oder nur in dem Deckelelement gelagert bzw. befestigt. Insbesondere erstrecken sich beide Lagerbuchsen ausgehend von dem jeweiligen Zahnrad in Richtung hin zum gleichen Teil des Gehäuses, also auch in der gleichen axialen Richtung.

Diese Anordnung ist besonders vorteilhaft, weil so nur an einem der Teile des Gehäuses, also an der Grundplatte oder am Deckelelement, eine entsprechende Tolerierung der Lage vorgenommen werden muss.

Bevorzugt ist zumindest eine der (besonders bevorzugt sind beide) Lagerbuchsen mit der Grundplatte oder dem Deckelelement über eine Presspassung verbunden. Presspassung heißt hier, dass vor dem Fügen von Lagerbuchse und Gehäuse ein Außendurchmesser der Lagerbuchse größer ist als ein Innendurchmesser der Aufnahmebohrung (in dem Gehäuse) für die Lagerbuchse.

Bevorzugt ist zumindest eine der (besonders bevorzugt sind beide) Lagerbuchsen mit der Grundplatte oder dem Deckelelement stoffschlüssig verbunden und einteilig ausgeführt (z. B. als ein einteiliger oder mehrteiliger Grünling ausgeführt und dann gemeinsam gesintert).

Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Insbesondere wird vorgeschlagen, dass ein Gleitlager zwischen der Lagerbuchse und dem als Hohlrad ausgeführtem Zahnrad vorgesehen ist. Insbesondere ist damit die Lagerbuchse fest im Gehäuse (also in der Grundplatte oder im Deckelelement) angeordnet, so dass eine Biegebelastung der Lagerbuchse verringert werden kann bzw. eine definierte Kraftüberleitung von der Lagerbuchse auf das Gehäuse über die Lagerstelle zwischen Lagerbuchse und Gehäuse erfolgen kann. Weiter ist so eine genaue Ausrichtung der beiden Zahnräder zueinander möglich, da beide Lagerbuchsen zusammen in der gleichen Komponente des Gehäuses angeordnet sind.

Insbesondere ist entlang der axialen Richtung zwischen der Grundplatte und dem Deckelelement ein Zwischenelement angeordnet, wobei das Zwischenelement die Bohrungen aufweist und in einer radialen Richtung außen die Zahnräder umschließt und zusammen mit der Grundplatte und dem Deckelement den Druckraum ausbildet. Das Zwischenelement ist insbesondere ein Scheibenelement, das im Hinblick auf eine Breite der Zahnräder toleriert ist und damit eine Länge des Druckraums entlang der axialen Richtung definiert.

Insbesondere sind zumindest die Grundplatte und das Deckelelement (ggf. zusätzlich das Zwischenelement) über Verbindungselemente zueinander ausgerichtet und miteinander verbunden, wobei jedes Verbindungselement einen Zentrierstift bildet. Insbesondere erstreckt sich zumindest eines der Verbindungselemente entlang der axialen Richtung durch das Zwischenelement und verbindet die Grundplatte und das Deckelelement.

Erfindungsgemäß ist das erste Zahnrad auf einer ersten Lagerbuchse und das zweite Zahnrad auf einer zweiten Lagerbuchse angeordnet, wobei die erste Lagerbuchse und die zweite Lagerbuchse jeweils nur in der Grundplatte oder dem Deckelelement gelagert sind. Zumindest die Grundplatte und das Deckelelement sind über Verbindungselemente zueinander ausgerichtet und miteinander verbunden. Die Verbindungselemente und die Lagerbuchsen sind mit dem Deckelelement und/oder mit der Grundplatte über eine Presspassung und/oder eine stoffschlüssige Verbindung verbunden.

Bevorzugt sind die Verbindungselemente und die Lagerbuchsen mit dem Deckelelement und/oder mit der Grundplatte über eine Presspassung und/oder eine stoffschlüssige Verbindung verbunden. Die Verbindungselemente und die Lagerbuchsen bilden so Zentrierstifte, die über ihre äußeren Umfangsflächen die Positionierung der anderen Komponenten bestimmen. Die Lagerbuchsen bestimmen die Positionen der Zahnräder in der radialen Richtung. Die Verbindungselemente bestimmen die Positionen der Bohrungen in der radialen Richtung.

Durch die Anordnung aller Zentrierstifte (z. B. Verbindungselemente und Lagerbuchsen) in einer einzigen Komponente der Pumpenanordnung, nämlich in der Grundplatte oder in dem Deckelelement, können die Zahnräder sehr genau gegenüber den Bohrungen ausgerichtet werden, so dass die Pumpe eine hohe Effektivität erreichen kann. Infolge dieser Ausgestaltung ergeben sich nur sehr kurze Toleranzketten, so dass eine hohe Genauigkeit bei der Ausrichtung von Zahnrädern und Bohrungen zueinander erreicht werden kann.

Insbesondere ist zumindest eines der Zahnräder als Antriebszahnrad über eine Antriebswelle antreibbar, wobei die Antriebswelle über eine Öffnung in dem Deckelement (unmittelbar) mit dem Antriebszahnrad verbindbar ist.

Es ist möglich, jedes der Zahnräder über jeweils eine Antriebswelle anzutreiben.

Insbesondere wird über die Antriebswelle keine in der radialen Richtung wirkende Kraft ausgehend von den Zahnrädern über die Antriebswelle auf das Gehäuse übertragen. Insbesondere überträgt also die Antriebswelle lediglich ein in der Umfangsrichtung wirkendes Antriebsdrehmoment auf das Antriebszahnrad.

Gemäß einer bevorzugten Ausgestaltung sind zumindest die Grundplatte und das Deckelelement zumindest teilweise als Sinterteile ausgeführt.

Bevorzugt sind zumindest die Lagerbuchsen (vollständig) als Sinterteile ausgeführt.

Besonders bevorzugt ist zumindest eines der folgenden Bauteile, insbesondere mehrere bzw. alle Bauteile der folgenden Gruppe als Sinterteil ausgeführt: die Grundplatte, das Deckelelement, das Zwischenelement, die Lagerbuchsen, die Zahnräder, die Verbindungselemente..

Ein Sinterteil ist ein aus einem pulverförmigen Werkstoff gepresstes Bauteil (Grünling), das nachfolgend einem Sinterprozess zugeführt wurde. Insbesondere ist zumindest eines, bevorzugt alle von: die Grundplatte, das Deckelelement, das Zwischenelement, die Lagerbuchsen, die Zahnräder, die Verbindungselemente, aus einem metallischem Pulver durch Pressen und Sintern hergestellt. Insbesondere werden Lagerbuchsen und die die Lagerbuchsen aufnehmende Komponente des Gehäuses als separate Grünlinge (bevorzugt aus unterschiedlichen Werkstoffen) hergestellt, als Grünlinge zueinander gefügt (bevorzugt unter Ausbildung einer Presspassung) und dann gemeinsam gesintert (unter Ausbildung einer stoffschlüssigen Verbindung).

Es wird weiter ein Verfahren zur Herstellung einer Pumpenanordnung, insbesondere der hier beschriebenen Pumpenanordnung, vorgeschlagen, wobei die Pumpenanordnung zumindest ein Gehäuse mit zumindest einer Grundplatte und einem Deckelelement sowie zwei Zahnräder als Fördermittel aufweist. Das erste Zahnrad weist an einer äußeren Umfangsfläche eine erste Verzahnung mit einem ersten Außendurchmesser und das zweite Zahnrad an einer äußeren Umfangsfläche eine zweite Verzahnung mit einem zweiten Außendurchmesser auf. Die Zahnräder sind jeweils als Hohlräder ausgeführt. Das Verfahren umfasst zumindest die folgenden Schritte:
a) Bereitstellen von der Grundplatte, dem Deckelelement, des ersten Zahnrades sowie des zweiten Zahnrades (ggf. zusätzlich einer Zwischenplatte); wobei nur in einem von Grundplatte und Deckelelement für eine Ausrichtung der Zahnräder zu einem in dem Gehäuse vorgesehenen Druckraum eine Mehrzahl von Zentrierstiften vorgesehen ist. Als Zentrierstifte sind eine erste Lagerbuchse zur Aufnahme des ersten Zahnrades, eine zweite Lagerbuchse zur Aufnahme des zweiten Zahnrades, sowie zumindest zwei Verbindungselemente vorgesehen.
b) Anordnen des ersten Zahnrades auf der ersten Lagerbuchse, sowie Anordnen des zweiten Zahnrades auf der zweiten Lagerbuchse, so dass die Zahnräder über die Verzahnungen zur Förderung eines Fluids ineinandergreifen;
c) Verbinden von Grundplatte und Deckelelement zu einem Gehäuse unter Ausbildung des Druckraums durch die Verbindungselemente, wobei die Zahnräder entlang einer axialen Richtung zwischen der Grundplatte und dem Deckelelement in Bohrungen des Gehäuses angeordnet sind.

Bevorzugt sind die Lagerbuchsen und/oder die Verbindungselemente mit der Grundplatte oder mit dem Deckelelement über eine Presspassung oder stoffschlüssig verbunden. Insbesondere sind Lagerbuchsen und Grundplatte bereits vor dem Sintern verbunden (oder zusammen, also einteilig ausgeführt).

Die Ausführungen zu der Pumpenanordnung gelten in gleicher Weise für das Verfahren und umgekehrt.

Vorsorglich sei angemerkt, dass die hier verwendeten Zahlwörter ("erste", "zweite",...) vorrangig (nur) zur Unterscheidung von mehreren gleichartigen Gegenständen oder Größen dienen, also insbesondere keine Abhängigkeit und/oder Reihenfolge dieser Gegenstände oder Größen zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine erste Pumpenanordnung in einer perspektivischen Ansicht und in einer Explosionsdarstellung;
- Fig. 2:: eine zweite Pumpenanordnung in einer perspektivischen Ansicht und in einer Explosionsdarstellung;
- Fig. 3:: eine dritte Pumpenanordnung in einer perspektivischen Ansicht und in einer Explosionsdarstellung; und
- Fig. 4:: die Pumpenanordnung nach Fig. 3 in einer Seitenansicht im Schnitt.

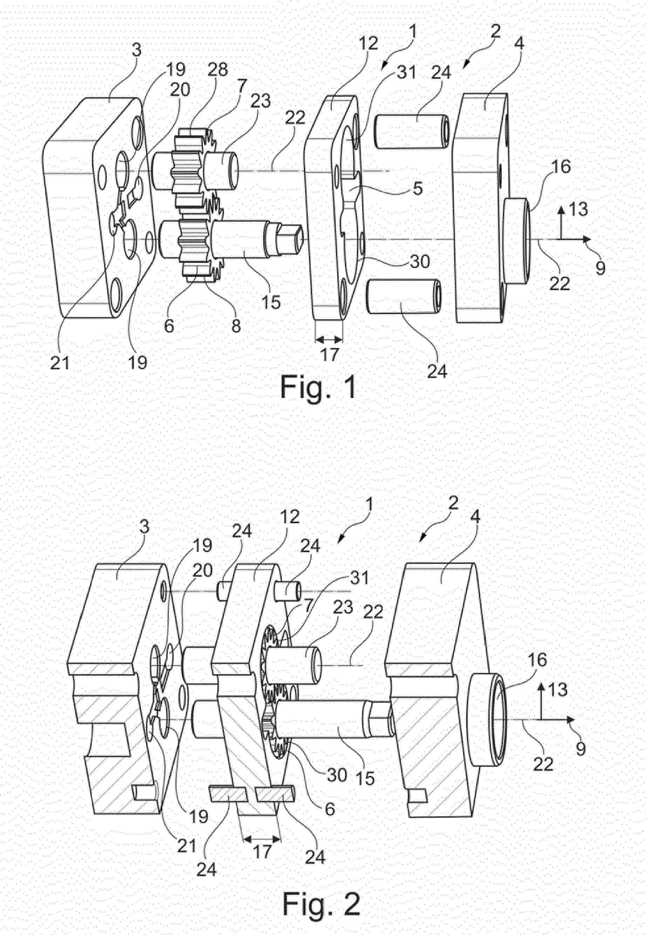

Fig. 1 zeigt eine erste (zumindest teilweise von der hier neu vorgeschlagenen Pumpenanordnung abweichende) Pumpenanordnung in einer perspektivischen Ansicht und in einer Explosionsdarstellung. Fig. 2 zeigt eine zweite (zumindest teilweise von der hier neu vorgeschlagenen Pumpenanordnung abweichende) Pumpenanordnung in einer perspektivischen Ansicht und in einer Explosionsdarstellung. Die Fig. 1 und 2 werden im Folgenden teilweise gemeinsam beschrieben.

Die Pumpenanordnung 1 umfasst ein Gehäuse 2 und in dem Gehäuse 2 Fördermittel zum Fördern eines Fluids von einem Fluideingang 20 zu einem Fluidausgang 21. Fluideingang 20 und Fluidausgang 21 sind an bzw. in dem Gehäuse 2 angeordnet. Das Gehäuse 2 umfasst eine Grundplatte 3 und ein Deckelelement 4 sowie ein Zwischenelement 12, die miteinander über Verbindungselemente 24 verbindbar sind zur Ausbildung eines Druckraums 5. Die Fördermittel sind entlang einer axialen Richtung 9 zwischen der Grundplatte 3 und dem Deckelelement 4 in dem Druckraum 5 angeordnet. Das Zwischenelement 12 umschließt in einer radialen Richtung 13 außen die Zahnräder 6, 7. Das Zwischenelement 12 ist ein Scheibenelement, das im Hinblick auf eine Breite der Zahnräder 6, 7 toleriert ist und damit eine Länge 17 des Druckraums 5 entlang der axialen Richtung 9 definiert. Das Zwischenelement weist eine erste Bohrung 30 und eine zweite Bohrung 31 auf. In der ersten Bohrung 30 ist das erste Zahnrad 6, in der zweiten Bohrung 31 das zweite Zahnrad 7 angeordnet. Eines der Fördermittel wird über eine Antriebswelle 15 angetrieben, die sich von außerhalb des Gehäuses 2 über eine Öffnung 16 in das Gehäuse 2 hinein erstreckt. Hier werden als Fördermittel zwei ineinandergreifende Zahnräder 6, 7 vorgesehen. Jedes Zahnrad 6, 7 weist eine Verzahnung 8, 28 an der äußeren Umfangsfläche auf, wobei die Zahnräder 6, 7 über die Verzahnungen 8, 28 zur Förderung eines Fluids miteinander gekoppelt sind.

Die Zahnräder 6, 7 weisen Drehachsen 22 auf, die entlang einer axialen Richtung 9 orientiert sind. Die Zahnräder 6, 7 sind in einer radialen Richtung 13 nebeneinander und in der axialen Richtung 9 überlappend angeordnet, wobei die Drehachsen 22 parallel zueinander angeordnet sind.

Die Fördermittel sind auf Wellen 15, 23 angeordnet und die Wellen 15, 23 beidseits des Fördermittels im Gehäuse 2, also hier in der Grundplatte 3 und im Deckelelement 4, an Lagerstellen 19 gelagert. Weiterhin ist eine Antriebswelle 15 direkt mit dem Fördermittel verbunden und das Fördermittel über die Antriebswelle 15 an Lagerstellen 19 gelagert. Gelagert heißt hier, dass in einer radialen Richtung 13 (ggf. zusätzlich in einer axialen Richtung 9) wirkende Kräfte zumindest in einer radialen Richtung 13 (ggf. auch in der axialen Richtung 9) über das Fördermittel auf die Welle 15, 23 bzw. auf die Lagerstelle 19 der Welle 15, 23 in dem Gehäuse 2 übertragen werden. Eine Lagerung der Welle 15, 23 auf beiden Seiten des Fördermittels erfordert aber eine genaue Abstimmung der Lagetoleranzen der Lagerstellen 19 am Gehäuse 2. Insbesondere können so aber auch ungleichmäßige Belastungen der Lagerstellen 19 und Biegebelastungen der Wellen 15, 23 auftreten.

In Fig. 1 sind Verbindungselemente 24 vorgesehen, die sich durch das Zwischenelement 12 erstrecken und an ihren beiden Enden in Aufnahmebohrungen in der Grundplatte 3 und in dem Deckelelement 4 aufgenommen sind.

In Fig. 2 sind Verbindungselemente 24 vorgesehen, die jeweils auf einer Seite des Zwischenelements 12 angeordnet sind, wobei jeweils ein Verbindungselement 24 das Zwischenelement 12 und die Grundplatte 3 und jeweils ein anderes Verbindungselement 24 das Zwischenelement 12 und das Deckelelement 4 verbindet.

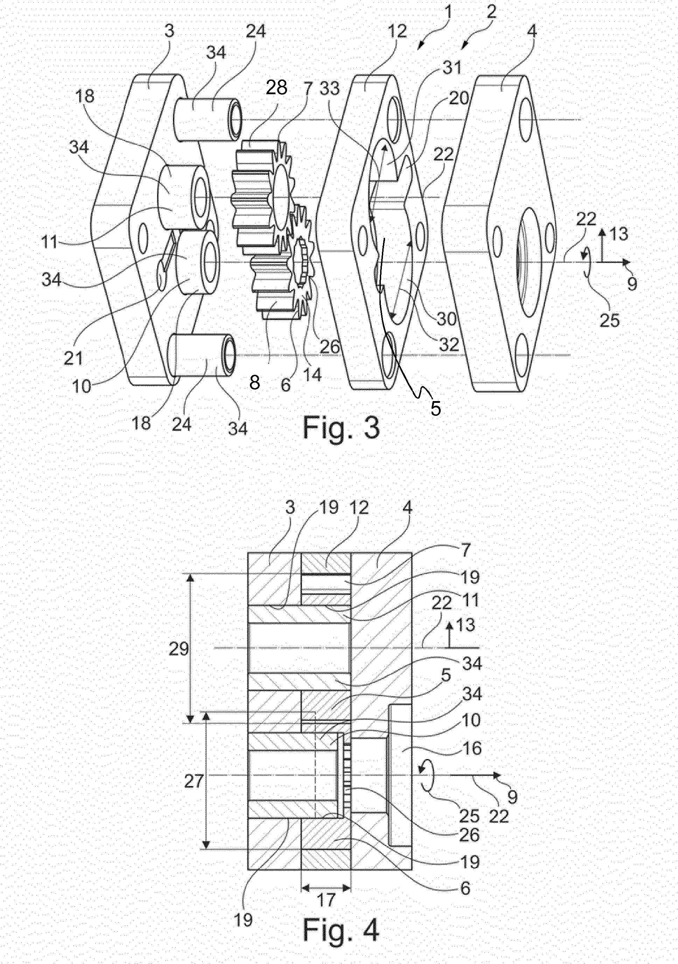

Fig. 3 zeigt eine dritte Pumpenanordnung in einer perspektivischen Ansicht und in einer Explosionsdarstellung. Fig. 4 zeigt die Pumpenanordnung 1 nach Fig. 3 in einer Seitenansicht im Schnitt. Die Fig. 3 und 4 werden im Folgenden gemeinsam beschrieben.

Die Pumpenanordnung 1 umfasst ein Gehäuse 2 und zwei Zahnräder 6, 7 als Fördermittel. Das Gehäuse 2 umfasst eine Grundplatte 3, ein Zwischenelement 12 und ein Deckelelement 4, die miteinander über Verbindungselemente 24 verbindbar sind zur Ausbildung eines Druckraums 5. Die zwei Zahnräder 6, 7 weisen jeweils an einer äußeren Umfangsfläche eine Verzahnung 8, 28 auf und greifen über die Verzahnungen 8, 28 zur Förderung eines Fluids ineinander. Die Zahnräder 6, 7 sind entlang einer axialen Richtung 9 zwischen der Grundplatte 3 und dem Deckelelement 4 in dem Druckraum 5 angeordnet. Das erste Zahnrad 6 und das zweite Zahnrad 7 sind jeweils als ein Hohlrad ausgeführt, wobei das erste Zahnrad 6 auf einer ersten Lagerbuchse 10 und das zweite Zahnrad 7 auf einer zweiten Lagerbuchse 11 angeordnet ist. Die erste Lagerbuchse 10 und die zweite Lagerbuchse 11 sind jeweils nur in der Grundplatte 3 angeordnet. Die Zahnräder 6, 7 weisen Drehachsen 22 auf, die entlang einer axialen Richtung 9 orientiert sind. Die Zahnräder 6, 7 sind in einer radialen Richtung 13 nebeneinander und in der axialen Richtung 9 überlappend angeordnet, wobei die Drehachsen 22 parallel zueinander angeordnet sind.

Grundplatte 3, Zwischenelement 12 und Deckelelement 4 sind entlang der axialen Richtung 9 hintereinander angeordnet, wobei zwischen ihnen die Zahnräder 6, 7 positioniert sind. Das Zwischenelement 12 umschließt die Zahnräder 6, 7 in einer radialen Richtung 13 außen und bildet so mit den anderen Teilen des Gehäuses 2 den Druckraum 5. Das Zwischenelement 12 ist ein Scheibenelement, das im Hinblick auf eine Breite der Zahnräder 6, 7 toleriert ist und damit eine Länge 17 des Druckraums 5 entlang der axialen Richtung 9 definiert. Der Druckraum 5 ist mit einem Fluideingang 20 und einem Fluidausgang 21 verbunden, so dass ein Fluid über den Fluideingang 20 und den Druckraum 5 zum Fluidausgang 21 gefördert werden kann.

Die Lagerbuchsen 10, 11 sind als sogenannte Gleitlager 18 ausgeführt. Im Gleitlager 18 haben die beiden sich relativ zueinander bewegenden Teile (hier Zahnrad 6, 7 und Lagerbuchse 10, 11) direkten Kontakt. Sie gleiten aufeinander gegen den durch Gleitreibung verursachten Widerstand und bilden die Lagerstelle 19 für das Zahnrad 6, 7.

Jedes Zahnrad 6, 7 ist damit nur an einer Seite des Zahnrads 6, 7 im Gehäuse 2, hier in der Grundplatte 3 über Lagerstellen 19 gelagert. Die für die Lagerung jedes Zahnrads 6, 7 vorgesehene Lagerbuchse 10, 11 erstreckt sich ausgehend von dem Zahnrad 6, 7 nur hin zur Grundplatte 3. Damit ist die Lagerbuchse 10, 11 nur an einer Seite des Zahnrads 6, 7 im Gehäuse 2 gelagert bzw. befestigt, weist also nur eine Lagerstelle 19 auf.

Ein Gleitlager 18 ist zwischen jeder Lagerbuchse 10, 11 und dem jeweils als Hohlrad ausgeführtem Zahnrad 6, 7 vorgesehen. Die Lagerbuchsen 10, 11 sind fest im Gehäuse 2 (also in der Grundplatte 3) angeordnet.

Die Grundplatte 3 und das Deckelelement 4 sowie zusätzlich das Zwischenelement 12 sind über Verbindungselemente 24 zueinander ausgerichtet und miteinander verbunden. Die Verbindungselemente 24 erstrecken sich entlang der axialen Richtung 9 durch das Zwischenelement 12 und verbinden die Grundplatte 3 und das Deckelelement 4.

Eines der Zahnräder 6, 7 ist als Antriebszahnrad 14 über eine Antriebswelle 15 (siehe Fig. 1 und 2) antreibbar, wobei die Antriebswelle 15 über eine Öffnung 16 in dem Deckelelement 4 mit dem Antriebszahnrad 14 verbindbar ist. Erkennbar ist an dem Antriebszahnrad 14 eine Innenverzahnung 26 angeordnet, die mit der Antriebswelle 15 zum Antrieb des Antriebszahnrads 14 vorgesehen ist.

So wird über die Antriebswelle 15 keine in der radialen Richtung 13 wirkende Kraft ausgehend von den Zahnrädern 6, 7 über die Antriebswelle 15 auf das Gehäuse 2 übertragen. Die Antriebswelle 15 überträgt lediglich ein in der Umfangsrichtung 25 wirkendes Antriebsdrehmoment auf das Antriebszahnrad 14.

Der Druckraum 5 ist zumindest durch zwei Bohrungen 30, 31 in dem Gehäuse 2, hier dem Zwischenelement 12 gebildet. In der ersten Bohrung 30 mit einem ersten Innendurchmesser 32 ist das erste Zahnrad 6 mit dem ersten Außendurchmesser 27 und in der zweiten Bohrung 31 mit einem zweiten Innendurchmesser 33 das zweite Zahnrad 7 mit dem zweiten Außendurchmesser 29 angeordnet. Für eine Ausrichtung der Bohrungen 30, 31 und der Zahnräder 6, 7 zueinander ist eine Mehrzahl von Zentrierstiften 34 vorgesehen, wobei alle diese Zentrierstifte 34 hier ausschließlich über die Grundplatte 3 zueinander ausgerichtet sind. Hier bilden die zwei Verbindungselemente 24 sowie die erste Lagerbuchse 10 und die zweite Lagerbuchse 11 jeweils einen Zentrierstift 34.

Ausschließlich über die Grundplatte 3 zueinander ausgerichtet hier, dass z. B. alle Zentrierstifte 34 vor dem weiteren Zusammenbau der Pumpenanordnung 1 zunächst in der Grundplatte 3 angeordnet und zueinander ausgerichtet werden. Diese Art des Zusammenbaus lässt sich insbesondere auch an der fertig montierten Pumpenanordnung 1 nachweisen.

Als Zentrierstift 34 wird jede Komponente der Pumpenanordnung 1 bezeichnet, die über eine äußere Umfangsfläche die Anordnung und Positionierung (also deren Lage im Raum, insbesondere in einer radialen Richtung 13 quer zu den Drehachsen 22 der Zahnräder 6, 7) anderer Komponenten der Pumpenanordnung 1 bestimmt.

Fig. 3 verdeutlicht auch das Verfahren zur Herstellung einer Pumpenanordnung 1. In Schritt a) des Verfahrens werden Grundplatte 3, Deckelelement 4, Zwischenelement 12, Verbindungselemente 24, erstes Zahnrad 6 sowie zweites Zahnrad 7 bereitgestellt. Das erste Zahnrad 6 weist an einer äußeren Umfangsfläche eine erste Verzahnung 8 mit einem ersten Außendurchmesser 27 und das zweite Zahnrad 7 an einer äußeren Umfangsfläche eine zweite Verzahnung 28 mit einem zweiten Außendurchmesser 29 auf. Die Zahnräder 6, 7 sind jeweils als Hohlräder ausgeführt. Nur in der Grundplatte 3 ist für eine Ausrichtung der Zahnräder 6, 7 zu einem in dem Gehäuse 2 vorgesehenen Druckraum 5 bzw. zu den Bohrungen 30, 31 eine Mehrzahl von Zentrierstiften 34 vorgesehen. Als Zentrierstifte 34 sind die erste Lagerbuchse 10 zur Aufnahme des ersten Zahnrades 6, die zweite Lagerbuchse 11 zur Aufnahme des zweiten Zahnrades 7, sowie zwei Verbindungselemente 24 vorgesehen.

In Schritt b) wird das erste Zahnrad 6 auf einer ersten Lagerbuchse 10, die nur mit der Grundplatte 3 verbunden und darin gelagert ist sowie das zweite Zahnrad 7 auf einer zweiten Lagerbuchse 11, die ebenfalls nur mit der Grundplatte 3 verbunden und darin gelagert ist, angeordnet, so dass die Zahnräder 6, 7 über die Verzahnungen 8, 28 miteinander zur Förderung eines Fluids ineinandergreifen.

In Schritt c) werden Grundplatte 3, Zwischenelement 12 und Deckelelement 4 zu einem Gehäuse 2 unter Ausbildung eines Druckraums 5 durch die Verbindungselemente 24 zueinander ausgerichtet und miteinander verbunden, wobei die Zahnräder 6, 7 entlang einer axialen Richtung 9 zwischen der Grundplatte 3 und dem Deckelelement 4 in dem Druckraum 5 bzw. in den Bohrungen 30, 31 des Gehäuses 2 angeordnet sind.

### Bezugszeichenliste

- 1: Pumpenanordnung
- 2: Gehäuse
- 3: Grundplatte
- 4: Deckelelement
- 5: Druckraum
- 6: erstes Zahnrad
- 7: zweites Zahnrad
- 8: erste Verzahnung
- 9: axiale Richtung
- 10: erste Lagerbuchse
- 11: zweite Lagerbuchse
- 12: Zwischenelement
- 13: radiale Richtung
- 14: Antriebszahnrad
- 15: Antriebswelle
- 16: Öffnung
- 17: Länge
- 18: Gleitlager
- 19: Lagerstelle
- 20: Fluideingang
- 21: Fluidausgang
- 22: Drehachse
- 23: Welle
- 24: Verbindungselement
- 25: Umfangsrichtung
- 26: Innenverzahnune
- 27: erster Außendurchmesser
- 28: zweite Verzahnung
- 29: zweiter Außendurchmesser
- 30: erste Bohrung
- 31: zweite Bohrung
- 32: erster Innendurchmesser
- 33: zweiter Innendurchmesser
- 34: Zentrierstift

## Patentansprüche

1. Pumpenanordnung (1), zumindest umfassend
- ein Gehäuse (2) mit zumindest einer Grundplatte (3) und einem Deckelelement (4), die miteinander verbindbar sind zur Ausbildung eines Druckraums (5); und
- zwei Zahnräder (6, 7), wobei das erste Zahnrad (6) an einer äußeren Umfangsfläche eine erste Verzahnung (8) mit einem ersten Außendurchmesser (27) und das zweite Zahnrad (7) an einer äußeren Umfangsfläche eine zweite Verzahnung (28) mit einem zweiten Außendurchmesser (29) aufweist; wobei die Zahnräder (6, 7) über die Verzahnungen (8, 28) zur Förderung eines Fluids ineinandergreifen; wobei die Zahnräder (6, 7) entlang einer axialen Richtung (9) zwischen der Grundplatte (3) und dem Deckelelement (4) in dem Druckraum (5) angeordnet sind;
wobei der Druckraum (5) zumindest durch zwei Bohrungen (30, 31) in dem Gehäuse (2) gebildet ist, wobei in einer ersten Bohrung (30) mit einem ersten Innendurchmesser (32) das erste Zahnrad (6) und in einer zweiten Bohrung (31) mit einem zweiten Innendurchmesser (33) das zweite Zahnrad (7) angeordnet ist; wobei für eine Ausrichtung der Bohrungen (30, 31) und der Zahnräder (6, 7) zueinander eine Mehrzahl von Zentrierstiften (34) vorgesehen sind, wobei alle diese Zentrierstifte (34) ausschließlich über das Deckelelement (4) oder die Grundplatte (3) zueinander ausgerichtet sind; **dadurch gekennzeichnet, dass** das erste Zahnrad (6) auf einer ersten Lagerbuchse (10) und das zweite Zahnrad (7) auf einer zweiten Lagerbuchse (11) angeordnet ist, wobei die erste Lagerbuchse (10) und die zweite Lagerbuchse (11) jeweils nur in der Grundplatte (3) oder dem Deckelelement (4) gelagert sind; wobei zumindest die Grundplatte (3) und das Deckelelement (4) über Verbindungselemente (24) zueinander ausgerichtet und miteinander verbunden sind; wobei die Verbindungselemente (24) und die Lagerbuchsen (10, 11) mit dem Deckelelement (4) oder mit der Grundplatte (3) über eine Presspassung und/oder eine stoffschlüssige Verbindung verbunden sind.

2. Pumpenanordnung (1) nach Patentanspruch 1, wobei das erste Zahnrad (6) und das zweite Zahnrad (7) jeweils als ein Hohlrad ausgeführt sind, wobei das erste Zahnrad (6) auf der ersten Lagerbuchse (10) und das zweite Zahnrad (7) auf der zweiten Lagerbuchse (11) angeordnet ist, wobei die erste Lagerbuchse (10) und die zweite Lagerbuchse (11) jeweils nur in der Grundplatte (3) oder dem Deckelelement (4) gelagert sind, wobei die erste Lagerbuchse (10) und die zweite Lagerbuchse (11) jeweils einen Zentrierstift (34) bilden.

3. Pumpenanordnung (1) nach einem der vorhergehenden Patentansprüche, wobei entlang der axialen Richtung (9) zwischen der Grundplatte (3) und dem Deckelelement (4) ein Zwischenelement (12) angeordnet ist, wobei das Zwischenelement (12) die Bohrungen (30, 31) aufweist und in einer radialen Richtung (13) außen die Zahnräder (6, 7) umschließt und zusammen mit der Grundplatte (3) und dem Deckelelement (4) den Druckraum (5) ausbildet.

4. Pumpenanordnung (1) nach einem der vorhergehenden Patentansprüche, wobei zumindest die Grundplatte (3) und das Deckelelement (4) über Verbindungselemente (24) zueinander ausgerichtet und miteinander verbunden sind, wobei jedes Verbindungselement (24) einen Zentrierstift (34) bildet.

5. Pumpenanordnung (1) nach einem der vorhergehenden Patentansprüche, wobei zumindest eines der Zahnräder (6, 7) als Antriebszahnrad (14) über eine Antriebswelle (15) antreibbar ist, wobei die Antriebswelle (15) über eine Öffnung (16) in dem Deckelelement (4) mit dem Antriebszahnrad (14) verbindbar ist.

6. Pumpenanordnung (1) nach einem der vorhergehenden Patentansprüche, wobei zumindest die Grundplatte (3) und das Deckelelement (4) zumindest teilweise als Sinterteile ausgeführt sind.

7. Pumpenanordnung (1) nach einem der vorhergehenden Patentansprüche, wobei zumindest die Lagerbuchsen (10, 11) als Sinterteile ausgeführt sind.

8. Verfahren zur Herstellung einer Pumpenanordnung (1), wobei die Pumpenanordnung zumindest ein Gehäuse (2) mit zumindest einer Grundplatte (3) und einem Deckelelement (4) sowie zwei Zahnräder (6, 7) als Fördermittel aufweist; wobei das erste Zahnrad (6) an einer äußeren Umfangsfläche eine erste Verzahnung (8) mit einem ersten Außendurchmesser (27) und das zweite Zahnrad (7) an einer äußeren Umfangsfläche eine zweite Verzahnung (28) mit einem zweiten Außendurchmesser (29) aufweist; wobei die Zahnräder (6, 7) jeweils als Hohlräder ausgeführt sind; wobei das Verfahren zumindest die folgenden Schritte umfasst:
a) Bereitstellen von der Grundplatte (3), dem Deckelelement (4), des ersten Zahnrades (6) sowie des zweiten Zahnrades (7); wobei nur in einem von Grundplatte (3) und Deckelelement (4) für eine Ausrichtung der Zahnräder (6, 7) zu einem in dem Gehäuse (2) vorgesehenen Druckraum (5) eine Mehrzahl von Zentrierstiften (34) vorgesehen ist, wobei als Zentrierstifte (34) eine erste Lagerbuchse (10) zur Aufnahme des ersten Zahnrades (6), eine zweite Lagerbuchse (11) zur Aufnahme des zweiten Zahnrades (7), sowie zumindest zwei Verbindungselemente (24) vorgesehen sind;
b) Anordnen des ersten Zahnrades (6) auf der ersten Lagerbuchse (10), sowie Anordnen des zweiten Zahnrades (7) auf der zweiten Lagerbuchse (11), so dass die Zahnräder (6, 7) über die Verzahnungen (8, 28) zur Förderung eines Fluids ineinandergreifen;
c) Verbinden von Grundplatte (3) und Deckelelement (4) zu einem Gehäuse (2) unter Ausbildung des Druckraums (5) durch die Verbindungselemente (24), wobei die Zahnräder (6, 7) entlang einer axialen Richtung (9) zwischen der Grundplatte (3) und dem Deckelelement (4) in Bohrungen (30, 31) des Gehäuses (2) angeordnet sind.

## Claims

1. Pump assembly (1), at least comprising
- a housing (2) with at least one base plate (3) and a cover element (4), which are interconnectable in order to form a pressure chamber (5); and
- two gear wheels (6, 7), wherein an outer circumferential surface of the first gear wheel (6) has a first toothing (8) with a first outside diameter (27) and an outer circumferential surface of the second gear wheel (7) has a second toothing (28) with a second outside diameter (29), wherein the gear wheels (6, 7) intermesh via the toothings (8, 28) in order to convey a fluid; wherein the gear wheels (6, 7) are arranged along an axial direction (9) in the pressure chamber (5) between the base plate (3) and the cover element (4);
wherein the pressure chamber (5) is formed in the housing (2) at least by two bores (30, 31), wherein the first gear wheel (6) is arranged in a first bore (30) with a first inside diameter (32) and the second gear wheel (7) is arranged in a second bore (31) with a second inside diameter (33), wherein a plurality of centering pins (34) are provided for aligning the bores (30, 31) and the gear wheels (6, 7) with respect to one another, wherein all said centering pins (34) are aligned with respect to one another exclusively via the cover element (4) or the base plate (3); **characterized in that** the first gear wheel (6) is arranged on a first bearing bushing (10) and the second gear wheel (7) is arranged on a second bearing bushing (11), wherein the first bearing bushing (10) and the second bearing bushing (11) are each mounted only in the base plate (3) or the cover element (4), wherein at least the base plate (3) and the cover element (4) are aligned with respect to each other and interconnected via connecting elements (24), wherein the connecting elements (24) and the bearing bushings (10, 11) are connected to the base plate (3) or to the cover element (4) via a press fit and/or in an integrally bonded manner.

2. Pump assembly (1) as claimed in claim 1, wherein the first gear wheel (6) and the second gear wheel (7) are each designed as a ring gear, wherein the first gear wheel (6) is arranged on the first bearing bushing (10) and the second gear wheel (7) is arranged on the second bearing bushing (11), wherein the first bearing bushing (10) and the second bearing bushing (11) are each mounted only in the base plate (3) or the cover element (4), wherein the first bearing bushing (10) and the second bearing bushing (11) each form a centering pin (34).

3. Pump assembly (1) as claimed in one of the preceding claims, wherein an intermediate element (12) is arranged along the axial direction (9) between the base plate (3) and the cover element (4), wherein the intermediate element (12) has the bores (30, 31) and surrounds the gear wheels (6, 7) on the outside in a radial direction (13) and, together with the base plate (3) and the cover element (4), forms the pressure chamber (5).

4. Pump assembly (1) as claimed in one of the preceding claims, wherein at least the base plate (3) and the cover element (4) are aligned with respect to each other and interconnected via connecting elements (24), wherein each connecting element (24) forms a centering pin (34).

5. Pump assembly (1) as claimed in one of the preceding claims, wherein at least one of the gear wheels (6, 7) is drivable as a driving gear wheel (14) via a drive shaft (15), wherein the drive shaft (15) is connectable to the driving gear wheel (14) via an opening (16) in the cover element (4).

6. Pump assembly (1) as claimed in one of the preceding claims, wherein at least the base plate (3) and the cover element (4) are at least partially designed as sintered parts.

7. Pump assembly (1) as claimed in one of the preceding claims, wherein at least the bearing bushings (10, 11) are designed as sintered parts.

8. Method for producing a pump assembly (1), wherein the pump assembly has at least a housing (2) with at least one base plate (3) and a cover element (4) and also two gear wheels (6, 7) as conveying means, wherein an outer circumferential surface of the first gear wheel (6) has a first toothing (8) with a first outside diameter (27) and an outer circumferential surface of the second gear wheel (7) has a second toothing (28) with a second outside diameter (29), wherein the gear wheels (6, 7) are each designed as ring gears; wherein the method comprises at least the following steps:
a) providing the base plate (3), the cover element (4), the first gear wheel (6) and also the second gear wheel (7); wherein a plurality of centering pins (34) are provided only in either the base plate (3) or the cover element (4) for aligning the gear wheels (6, 7) with respect to a pressure chamber (5) provided in the housing (2), wherein a first bearing bushing (10) for receiving the first gear wheel (6), a second bearing bushing (11) for receiving the second gear wheel (7), and at least two connecting elements (24) are provided as the centering pins (34);
b) arranging the first gear wheel (6) on the first bearing bushing (10) and arranging the second gear wheel (7) on the second bearing bushing (11) such that the gear wheels (6, 7) intermesh via the toothings (8, 28) in order to convey a fluid;
c) connecting the base plate (3) and the cover element (4) to form a housing (2), with the pressure chamber (5) being formed, by the connecting elements (24), wherein the gear wheels (6, 7) are arranged along an axial direction (9) between the base plate (3) and the cover element (4) in bores (30, 31) of the housing (2).

## Revendications

1. Agencement de pompe (1), comprenant au moins :
- un boîtier (2) avec au moins une plaque de base (3) et un élément de couvercle (4), qui peuvent être reliés entre eux pour réaliser une chambre de pression (5) ; et
- deux roues dentées (6, 7), la première roue dentée (6) présentant sur une surface périphérique extérieure une première denture (8) avec un premier diamètre extérieur (27) et la deuxième roue dentée (7) présentant sur une surface périphérique extérieure une deuxième denture (28) avec un deuxième diamètre extérieur (29) ; les roues dentées (6, 7) s'engrenant l'une dans l'autre par l'intermédiaire des dentures (8, 28) pour le transport d'un fluide ; les roues dentées (5, 7) étant agencées le long d'une direction axiale (9) entre la plaque de base (3) et l'élément de couvercle (4) dans la chambre de pression (5) ;
la chambre de pression (5) étant formée par au moins deux alésages (30, 31) dans le boîtier (2), la première roue dentée (6) étant agencée dans un premier alésage (30) avec un premier diamètre intérieur (32) et la deuxième roue dentée (7) étant agencée dans un deuxième alésage (31) avec un deuxième diamètre intérieur (33) ; une pluralité de goupilles de centrage (34) étant prévues pour un alignement des alésages (30, 31) et des roues dentées (6, 7) les uns par rapport aux autres, toutes ces goupilles de centrage (34) étant alignées les unes par rapport aux autres exclusivement par l'intermédiaire de l'élément de couvercle (4) ou de la plaque de base (3) ; **caractérisé en ce que** la première roue dentée (6) est agencée sur un premier coussinet (10) et la deuxième roue dentée (7) sur un deuxième coussinet (11), le premier coussinet (10) et le deuxième coussinet (11) étant respectivement montés uniquement dans la plaque de base (3) ou l'élément de couvercle (4) ; au moins la plaque de base (3) et l'élément de couvercle (4) étant alignés l'un par rapport à l'autre et reliés entre eux par l'intermédiaire d'éléments de liaison (24) ; les éléments de liaison (24) et les coussinets (10, 11) étant reliés à l'élément de couvercle (4) ou à la plaque de base (3) par l'intermédiaire d'un ajustement serré et/ou d'une liaison par matière.

2. Agencement de pompe (1) selon la revendication 1, dans lequel la première roue dentée (6) et la deuxième roue dentée (7) sont chacune conçues sous la forme d'une couronne, la première roue dentée (6) étant agencée sur le premier coussinet (10) et la deuxième roue dentée (7) sur le deuxième coussinet (11), le premier coussinet (10) et le deuxième coussinet (11) étant respectivement montés uniquement dans la plaque de base (3) ou dans l'élément de couvercle (4), le premier coussinet (10) et le deuxième coussinet (11) formant respectivement une goupille de centrage (34).

3. Agencement de pompe (1) selon l'une quelconque des revendications précédentes, dans lequel un élément intermédiaire (12) est agencé le long de la direction axiale (9) entre la plaque de base (3) et l'élément de couvercle (4), l'élément intermédiaire (12) présentant les alésages (30, 31) et entourant extérieurement les roues dentées (6, 7) dans une direction radiale (13) et réalisant la chambre de pression (5) conjointement avec la plaque de base (3) et l'élément de couvercle (4).

4. Agencement de pompe (1) selon l'une quelconque des revendications précédentes, dans lequel au moins la plaque de base (3) et l'élément de couvercle (4) sont alignés l'un par rapport à l'autre et reliés entre eux par l'intermédiaire d'éléments de liaison (24), chaque élément de liaison (24) formant une goupille de centrage (34).

5. Agencement de pompe (1) selon l'une quelconque des revendications précédentes, dans lequel au moins l'une des roues dentées (6, 7) est entraînable en tant que roue dentée d'entraînement (14) par l'intermédiaire d'un arbre d'entraînement (15), l'arbre d'entraînement (15) pouvant être relié à la roue dentée d'entraînement (14) par l'intermédiaire d'une ouverture (16) dans l'élément de couvercle (4).

6. Agencement de pompe (1) selon l'une quelconque des revendications précédentes, dans lequel au moins la plaque de base (3) et l'élément de couvercle (4) sont conçus au moins partiellement sous forme de pièces frittées.

7. Agencement de pompe (1) selon l'une quelconque des revendications précédentes, dans lequel au moins les coussinets (10, 11) sont conçus sous forme de pièces frittées.

8. Procédé de fabrication d'un agencement de pompe (1), l'agencement de pompe présentant au moins un boîtier (Z) avec au moins une plaque de base (3) et un élément de couvercle (4) ainsi que deux roues dentées (6, 7) en tant que moyen de transport ; la première roue dentée (6) présentant sur une surface périphérique extérieure une première denture (8) avec un premier diamètre extérieur (27) et la deuxième roue dentée (7) présentant sur une surface périphérique extérieure une deuxième denture (28) avec un deuxième diamètre extérieur (29) ; les roues dentées (6, 7) étant chacune conçues sous forme de couronnes ; le procédé comprenant au moins les étapes suivantes :
a) la fourniture de la plaque de base (3), de l'élément de couvercle (4), de la première roue dentée (6) et de la deuxième roue dentée (7) ; une pluralité de goupilles de centrage (34) étant prévues uniquement dans un composant parmi la plaque de base (3) et l'élément de couvercle (4) pour un alignement des roues dentées (6, 7) par rapport à une chambre de pression (5) prévue dans le boîtier (2), un premier coussinet (10) pour recevoir la première roue dentée (6), un deuxième coussinet (11) pour recevoir la deuxième roue dentée (7), ainsi qu'au moins deux éléments de liaison (24) étant prévus en tant que goupilles de centrage (34) ;
b) l'agencement de la première roue dentée (6) sur le premier coussinet (10), ainsi que l'agencement de la deuxième roue dentée (7) sur le deuxième coussinet (11), de telle sorte que les roues dentées (6, 7) s'engrènent l'une dans l'autre par l'intermédiaire des dentures (8, 28) pour le transport d'un fluide ;
c) la liaison de la plaque de base (3) et de l'élément de couvercle (4) en un boîtier (2) en réalisant la chambre de pression (5) par les éléments de liaison (24), les roues dentées (6, 7) étant agencées le long d'une direction axiale (9) entre la plaque de base (3) et l'élément de couvercle (4) dans des alésages (30, 31) du boîtier (2).
